# EUROPÄISCHE PATENTSCHRIFT

(11) **EP 1 792 174 B1**
(45) Veröffentlichungstag und Bekanntmachung des Hinweises auf die Patenterteilung: **18.04.2018**
(21) Anmeldenummer: 05777975.3
(22) Anmeldetag: 26.08.2005
(51) Int. Cl.: G01N 30/60, B01D 15/14, B01D 15/18, G01N 30/02

(54) **FLÜSSIGKEITSVERTEILER UND FLÜSSIGKEITSSAMMLER FÜR CHROMATOGRAPHIESÄULEN**
LIQUID DISTRIBUTOR AND LIQUID COLLECTOR FOR CHROMATOGRAPHY COLUMNS
DISTRIBUTEUR ET COLLECTEUR DE LIQUIDES CONÇU POUR DES COLONNES DE CHROMATOGRAPHIE

(30) Priorität: 08.09.2004 DE 102004043362
(43) Veröffentlichungstag der Anmeldung: 06.06.2007
(73) Patentinhaber: Bayer Aktiengesellschaft, 51373 Leverkusen (DE)
(72) Erfinder: KLEPP, Georg-Heinrich, 44892 Bochum (DE); BÖCKER, Sebastian, 51373 Leverkusen (DE); STRUBE, Jochen, 58099 Hagen (DE); KANSY, Heinz, 51061 Köln (DE); SCHMALE, Hendrik, 51379 Leverkusen (DE)
(74) Vertreter: BIP Patents
(86) Internationale Anmeldenummer: PCT/EP2005/009229
(87) Internationale Veröffentlichungsnummer: WO 2006/027118

(56) Entgegenhaltungen:
- WO-A-02/093159
- US-A- 4 537 217

## Beschreibung

Die vorliegende Anmeldung betrifft einen Flüssigkeitsverteiler bzw. -sammler für Säulen für die Flüssigchromätographie, der besonders für Säulen mit großer Querschnittsfläche im Verhältnis zur Packungshöhe geeignet ist.

Flüssigkeitsverteiler bzw. -sammler werden in der Säulenchromatographie verwendet, um die Flüssigkeit über den Strömungsquerschnitt gleichmäßig zu verteilen bzw. zu sammeln. Dies ist eine notwendige Voraussetzung, um die gewünschte Trennleistung zu erreichen.

Um die für die Aufreinigung der immer größer werdenden Feedvolumina benötigte Adsorbensmengen in einer Säule unterzubringen, geht die Entwicklung in der Chromatographie in Richtung größerer Säulendurchmesser, da die Säulenlänge aufgrund des Druckverlustes und einer möglichst kurzen Veiweil- bzw. Prozesszeit nach oben begrenzt ist. Um auch bei diesen Säulen mit großer Querschnittsfläche im Verhältnis zur Packungshöhe weiterhin gute Trennleistungen zu ermöglichen, werden neuartige Flüssigkeitsverteiler bzw. -sammler für die Gleichverteilung benötigt.

Bekannt sind Flüssigkeitsverteiler bzw. -sammler mit Spaltkonstruktion (WO 03/005018 A1, WO 02/093159A2, WO 98/55198), bei denen der Zulauf bzw. Ablauf über eine zentrale Öffnung erfolgt, wobei sich zwischen Öffnung und Packung ein schmaler Spalt befindet, der die gleichmäßige Verteilung gewährleisten soll. Bei zunehmendem Strömungsquerschnitt nimmt die Gleichmäßigkeit der Verteilung durch die unterschiedlichen Längen des Strömungsweges (von der Öffnung bis zu Mitte bzw. von der Öffnung bis zum Rand des Packungsquerschnitts) ab. Ein weiterer Ansatz besteht darin, die Flüssigkeit über mehrere Öffnungen zur Packung hin zu verteilen bzw. zu sammeln (WO89/11901, WO99/48599). Gleichverteilung wird dabei idealerweise dadurch erzielt, dass jeder Öffnung der gleiche Volumenstrom und jedem Strömungsweg die gleiche Verweilzeit entspricht. Konstruktiv wird das durch die gleiche Länge sowie gleiche Strömungswiderstände (Druckverluste) für die Strömungskanäle erreicht. Mit zunehmender Anzahl von Öffnungen (>32) können nicht mehr alle Kriterien gleichzeitig erfüllt werden. Es ergeben sich entweder Lösungen mit komplexen Strömungskanalgeometrien oder andererseits Geometrien, die nur für einen bestimmten Volumenstrom Gleichverteilung gewährleisten.

Ein bewährtes Prinzip für die Verteilung von Flüssigkeit auf eine größere Anzahl von Öffnungen bei steigendem Strömungsquerschnitt sieht die Verwendung von sich verzweigenden Strömungskanälen auf der Basis symmetrischer T-Verteiler vor (US 4537217, WO 99/48599). Dieses Prinzip gewährleistet durch gleiche Länge und geometrische Ähnlichkeit der Strömungskanäle den gleichen Strömungswiderstand und somit gleiche Volumenströme und gleiche Verweilzeiten. Bei zunehmendem Strömungsquerschnitt können jedoch nicht alle oben genannten Kriterien bezüglich der Strömung für beliebige Querschnittformen gleichzeitig erfüllt werden: gleiche Länge der Strömungskanäle und gleiche Strömungswiderstände bei großen Strömungsquerschnitten sind nur mit quadratischen Strömungsquerschnitten erreichbar (US 4537217), während die gleiche Verteilung von Volumenströmen auf die Öffnungen durch streng geometrische Verteilung (WO 99/48599) nur durch komplexe, dreidimensionale Strömungskanalanordnungen erhalten werden kann.

Eine Auslegung von Flüssigkeitsverteilern bzw. -sammlern für Chromatographiesäulen, die einen großen Durchmessern im Verhältnis zur Packungshöhe aufweisen, im Hinblick auf die Verweilzeit der Flüssigkeit in den Strömungskanälen ist bislang noch nicht bekannt.

Es stellt sich damit, ausgehend vom Stand der Technik, die Aufgabe einen Flüssigkeitsverteiler bzw. -sammler bereitzustellen, der auch für große Strömungsquerschnitte ausgelegt werden kann und durch gleichmäßige Verteilung die Voraussetzung für eine gute Trennleistung gewährleistet, keine Einschränkungen in bezug auf seine Form erleidet und möglichst einfach zu fertigen ist

Diese Aufgabe wird durch den erfindungsgemäßen Flüssigkeitsverteiler bzw. -sammler gelöst, indem zusätzlich zu Strömungskanälen mit symmetrischer T-Verteilerform, d.h. mit jeweils gleicher Länge und Querschnittsfläche, Strömungskanäle mit asymmetrischen T-Formen verwendet werden, d.h. die Längen und die Querschnittsflächen der Strömungskanäle können unterschiedlich groß sein. Die Anordnung und Maße der Strömungskanäle können so gewählt werden, dass für die Durchströmung vom Eintritt zu allen Austritten bzw. von allen Eintritten zum Austritt des Flüssigkeitsverteilers bzw. -sammlers die gleiche Zeit benötigt wird.

Dabei sollen die Massenströme, die jeder Öffnung durch die Anordnung und Maße der Strömungskanäle zugeordnet werden, möglichst gleich groß sein.

Durch die Verwendung der gleichen Durchströmungsdauer als maßgebliches Kriterium für die Gleichverteilung der Flüssigkeit über den Strömungsquerschnitt wird ein Flüssigkeitsverteiler bzw. -sammler zugänglich, der eine große Zahl von Öffnungen hat und damit große Strömungsquerschnitte bedienen kann, einfach in einer Ebene und aus einem Bauteil gefertigt werden kann, in der Form seiner Grundfläche nicht beschränkt ist und so auch den meisten Chromatographiesäulen entsprechend kreisrund sein und auf beliebige Durchmesser hin skaliert werden kann. Dadurch wird eine Übertragbarkeit aus dem Labormaßstab auf industrielle Produktionsmaßstäbe möglich. Die unter Verwendung des erfindungsgemäßen Flüssigkeitsverteilers- bzw. sammlers gefertigten Chromatographiesäulen haben gegenüber herkömmlichen Chromatographiesäulen gleicher Geometrie bei gleichen Operationsbedingungen den Vorteil einer verbesserten Trennung.

Die Gleichverteilung von Flüssigkeit auf große Strömungsquerschnitte wird beim erfindungsgemäßen Flüssigkeitsverteiler und -sammler durch eine möglichst große Anzahl von äquidistanten Öffnungen erreicht. Dabei sind einer Öffnung 50 bis 5000, bevorzugt 200 bis 800, besonders bevorzugt 300 bis 400 Quadratmillimeter Querschnittsfläche der Säulenpackung zugeordnet.

Der erfindungsgemäße Flüssigkeitsverteiler und -sammler ist weiterhin dadurch gekennzeichnet, dass die verbindenden Flüssigkeitspassagen (Strömungskanäle) in einer Ebene angeordnet sind, wobei die Grundfläche beliebig, bevorzugt rund oder rechteckig, besonders bevorzugt kreisrund, sein kann.

Der erfindungsgemäße Flüssigkeitsverteiler bzw. -sammler kann aus Metall, aus Glas oder einem beliebigen geeigneten Kunststoff (z.B. Polycarbonat, Polyester, Polymethylmethacrylat) gefertigt werden, bevorzugt aus Metall, besonders bevorzugt aus korrosionsbeständigem Metall, dabei ganz besonders bevorzugt aus Edelstahl. Zur Herstellung des erfindungsgemäßen Flüssigkeitsverteiler bzw. -sammlers können die Strömungskanäle durch spanende Bearbeitung (z.B. Bohren, Fräsen) des Werkstoffes eingetragen werden, der Flüssigkeitsverteiler bzw. -sammler kann aber auch durch Gießen (z.B. von Glas oder Kunststoff) hergestellt werden.

Der Flüssigkeitsverteiler bzw. -sammler kann aus mehreren entsprechend bearbeiteten Teilen zusammengesetzt werden (z.B. durch Schweißen, Löten, Kleben oder durch eine Schraubverbindung) oder auch aus einem einzigen Werkstück bestehen.

In einem besonders bevorzugten Verfahren zur Herstellung des erfindungsgemäßen Flüssigkeitsverteiler bzw. -sammlers wird ein einziges Werkstück aus Edelstahl durch Fräsen und Bohren mit den entsprechenden Strömungskanälen und Öffnungen versehen.

Anordnung und Abmessungen der Strömungskanäle für den erfindungsgemäßen Flüssigkeitsverteiler bzw. -sammler werden dabei wie folgt ermittelt:
Zur Ermittlung der optimalen Strömungsquerschnittsfläche, die einer Öffnung des Flüssigkeitsverteilers bzw. -sammlers zugeordnet werden kann, wird im Labor und/oder im Pilotmaßstab ein Puls auf mehrere Säulen mit verschiedenen Querschnitten bei sonst gleichen Bedingungen aufgegeben und die von einem Detektor gelieferten Chromatogramme hinsichtlich der Retentionszeit, der Stufenzahl, der Symmetrie und der Peakauflösung bewertet. Es wird aus dieser Reihe als optimale Strömungsquerschnittsfläche die größte Strömungsfläche bei noch zufriedenstellender Trennleistung gewählt.

Aus dem Quotient aus der Strömungsquerschnittsfläche der Säulenpackung im Produktionsmaßstab und der im Labor ermittelten optimalen Strömungsquerschnittsfläche folgt die optimale Anzahl der benötigten Öffnungen des Flüssigkeitssammlers bzw. -Verteilers.

Die Öffnungen des Flüssigkeitssammlers bzw. -verteilers werden äquidistant über den durch die zu verwendende Säule im Produktionsmaßstab vorgegebenen Strömungsquerschnitt angeordnet. Die einzelnen Öffnungen werden durch Strömungskanäle miteinander verbunden, die ein Netzwerk symmetrischer T-Verteiler bilden. Dabei werden benachbarte Öffnungen bzw. Kanäle jeweils durch einen Kanal verbunden. Die Lage der Strömungskanäle sowie die Abmessung (Höhe und Breite) der einzelnen Strömungskanäle werden in einer ersten Näherung aufgrund geometrischer Erwägungen und Erfahrungswerte so angepasst, dass näherungsweise dem Strömungsweg zu jeder Öffnung die gleiche Verweilzeit zugeordnet ist, dadurch entstehen Bereiche mit Strömungskanalabschnitten gleicher Länge und gleicher Querschnittsfläche als auch Bereiche mit Strömungskanälen davon abweichender Länge und/oder Querschnittsfläche. Zusätzlich sollen die Volumenströme, die den einzelnen Öffnungen zugeordnet sind, möglichst ähnlich sein. Diese Auslegung für die Verweilzeit und den Volumenstrom erfolgt bspw. mit Hilfe der numerischen Strömungssimulation, es sind aber auch andere Näherungs- und Simulationsverfahren denkbar. So können beispielsweise in erster Näherung die Verweilzeiten und Volumenströme auf der Grundlage von Massen- und Energie- bzw. Impulsbilanzen für die eindimensionale Strömung entlang eines Stromfadens zwischen einzelnen ausgewählten Strömungsquerschnitten bestimmt werden. Es wird ein computergestütztes Modell des Flüssigkeitsverteilers bzw. -sammlers erstellt, und die Verweilzeiten und Volumenströme werden auf der Grundlage einer Strömungssimulation bestimmt. Durch Variationen der Modellgeometrien kann die Geometrie des Flüssigkeitsverteilers bzw. -sammlers dann so festgelegt werden, dass die oben genannten Bedingungen erfüllt sind. In der Regel sind mehrere Iterationszyklen notwendig, zweckmäßigerweise mindestens 2.

In Versuchen wird dann der Flüssigkeitsverteiler bzw. -sammler getestet, wobei gegebenenfalls noch Verbesserungen bei der Geometrie möglich sind. Analog zur Vorgehensweise im Labor- bzw. Pilotmaßstab werden Pulse auf die Säule aufgegeben. Aus den Chromatogrammen werden Retentionszeiten, Stufenzahlen, Symmetrien und Peakauflösungen ermittelt und mit den Werten aus dem Labor- bzw. Pilotmaßstab verglichen. Auch Farbversuche, d.h. das Fortschreiten einer gefärbten Flüssigkeitsfront im Verteiler in der Packung und im Sammler sind möglich, wenn die Bauteile aus einem durchsichtigen Material gefertigt sind.

Bei gegebener Zahl der Öffnungen kann der Flüssigkeitsverteiler bzw. -sammler unter Beibehaltung der ursprünglichen Größenverhältnisse der Strömungskanäle auf jeden technisch sinnvollen Durchmesser skaliert werden. Dabei werden die für einen gegebenen Flüssigkeitsverteiler bzw. -sammler ermittelten Abmessungen für die Strömungskanäle, d.h. sowohl die Abstände der Öffnungen zueinander als auch die Länge, die Höhe sowie die Breite der Strömungskanäle unter Beibehaltung der prinzipiellen geometrischen Anordnung mit einem zur Zielgröße führenden Faktor versehen.

Durch Einschränkungen bei der Konstruktion sowie in der Fertigung sind bei der praktischen Ausführung kleinere Abweichungen von der theoretischen Verteilung möglich.

Der erfindungsgemäße Flüssigkeitsverteiler bzw. -sammler kann für die Herstellung beliebiger Chromatographiesäulen für die Liquid Chromatographie (LC), die überkritische Flüssigkeitschromatographie (SFC) und die Hochdruck- bzw. Hochleistungschromatographie (HPLC), dabei bevorzugt bei Chromatographiesäulen mit großem Durchmesser im Vergleich zur Packungshöhe verwendet werden, die ihrerseits in der analytischen und der präparativen Chromatographie und in der Prozesschromatographie, in der Elutionschromatographie, der Adsorptions- (LSC) und der Displacement Chromatographie, dabei in der Chiral-, der Normalphasen-, der Reverse Phase-(RPC), der Ionenaustausch- (IEC), Ionenpaar- (IPC), Ionenausschluss-, der Gelpermeations- (GPC) bzw. Gelfitrationschromatographie (GFC) bzw. Size Exclusion Chromatographie (SEC), der hydrophoben Wechselwirkungs- (HIC), der Hydroxyapatit-, der Affinitäts-, der immoblisierten Metallaffinitätschromatographie (IMAC) und sowohl in der Batchchromatographie als auch in kontinuierlichen Verfahren wie der annularen Chromatographie und in der Simulated-Moving-Bed-(SMB) Chromatographie eingesetzt werden können. Bevorzugt ist der Einsatz in der präparativen Chromatographie, besonders bevorzugt in der präparativen Chiral-, der Normalphasen-, der Reverse Phase- (RPC), der Ionenaustausch- (IEC), der Gelpermeationschromatographie (GPC), der hydrophoben Wechselwirkungs- (HIC), der Hydroxyapatit-, der Affinitäts-, der immoblisierten Metallaffinitätschromatographie (IMAC) und sowohl in der Batchchromatographie als auch in kontinuierlichen Verfahren, hierbei ganz besonders bevorzugt in der Simulated-Moving-Bed (SMB)-Chromatographie.

Diese Säulen und ihre Verwendung in der analytischen und präparativen Chromatographie sind ebenfalls Gegenstand der vorliegenden Erfindung.

Die Verwendung einer Fritte, bevorzugt aus Metall, Keramik, Kunststoff, Glas, bevorzugt aus Sintermetalle und Metallgewebe, besonders bevorzugt als mehrlagiges Metallgewebe (Nennweite 5 bis 500 Mikrometer) auch mit grobporigem Drainagegewebe (Nennweite 0,5 bis 5 mm), kann die Gleichverteilung des Flüssigkeitsverteilers und -sammlers weiter verbessern.

Der erfindungsgemäße Flüssigkeitsverteiler und -sammler kann auch für andere Aufgabenstellungen, die eine gleichmäßige Verteilung von Flüssigkeit über eine bestimmte Zahl von Öffnungen auf eine Fläche, auf der z.B. auch den Öffnungen zugehörige Behältnisse angeordnet sein dürfen, eingesetzt werden. Denkbar ist eine Verwendung zur Probenapplikation beispielsweise im High Throughput Screening.

Die Erfindung wird nachstehend anhand der Figuren beispielhaft näher erläutert ohne sie jedoch darauf zu beschränken.

Es zeigen:
- Fig. 1: die der Säulenpackung zugewandte Seite des Flüssigkeitsverteilers bzw. -sammlers.
- Fig. 2: die der Säulenpackung abgewandte Seite des Flüssigkeitsverteilers bzw. -sammler mit Zulauf bzw. Ablauf und Strömungskanälen.

### Beispiele

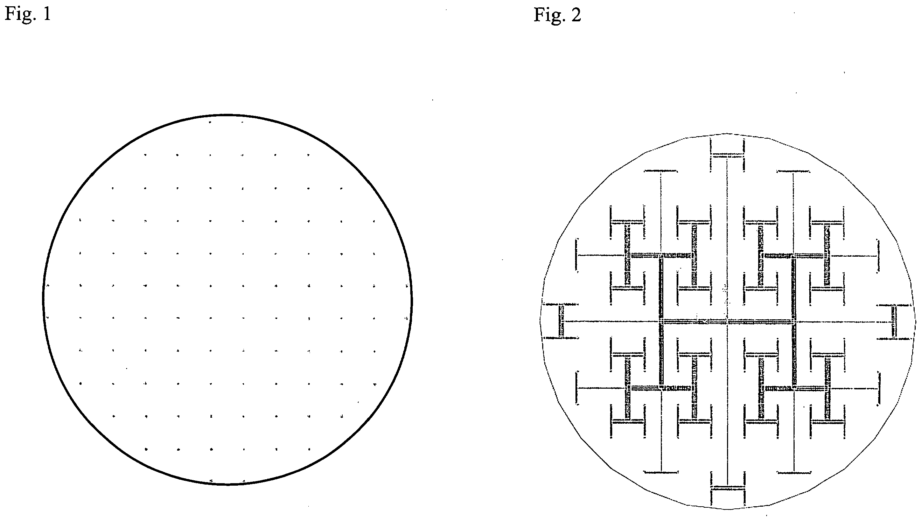

- Fig. 1: zeigt die der Säulenpackung zugewandte Seite des Flüssigkeitsverteilers bzw. -sammlers. Erkennbar sind 96 äquidistante Öffnungen, die gleichmäßig über den kreisförmigen Strömungsquerschnitt angeordnete sind. Die Öffnungen sind kreisrund.
- Fig. 2: zeigt die der Säulenpackung abgewandte Seite des Flüssigkeitsverteilers bzw. -sammlers mit im Mittelpunkt liegendem Zulauf bzw. Ablauf. Dargestellt sind die Strömungskanäle in symmetrischer und asymmetrischer T-Verteilerform. Die Öffnungen zur Säulenpackung hin liegen jeweils in den Spitzen der Ts.

## Patentansprüche

1. Flüssigkeitsverteiler und Flüssigkeitssammler für Chromatographiesäulen mit mindestens einer Flüssigkeitseintritts- bzw. -austrittsöffnung und verbindenden Strömungskanälen zwischen Eintritts- bzw. Austrittsöffnung zu äquidistant angeordneten Öffnungen zur Säulenpackung, **dadurch gekennzeichnet, dass** ein Teil der verbindenden Strömungskanäle symmetrische T-Verteilerformen, der andere Teil asymmetrische T-Verteilerformen aufweist, so dass für die Durchströmung vom Eintritt zu allen Austritten des Flüssigkeitsverteilers bzw. von allen Eintritten zum Austritt des Flüssigkeitssammlers durch die verschiedenen Strömungskanäle die gleiche Zeit benötigt wird, wobei Strömungskanäle mit symmetrischer T-Verteilerform dadurch definiert sind, dass sie die gleiche Länge und die gleiche Querschnittsfläche aufweisen, während Strömungskanäle mit asymmetrischer T-Verteilerform davon abweichende Längen und Querschnittsflächen aufweisen.

2. Flüssigkeitsverteiler und -sammler gemäß Anspruch 1, **dadurch gekennzeichnet, dass** jeder Öffnung 50 - 5000 Quadratmillimeter Querschnittsfläche der Säulenpackung zugeordnet sind.

3. Flüssigkeitsverteiler und -sammler gemäß einem der Ansprüche 1 bis 2, **dadurch gekennzeichnet, dass** die verbindenden Strömungskanäle in einer Ebene angeordnet sind.

4. Flüssigkeitsverteiler und -sammler gemäß einem der Ansprüche 1 bis 3, **dadurch gekennzeichnet, dass** die Grundfläche des Verteilers bzw. Sammlers rund oder rechteckig ist.

5. Verfahren zur Herstellung des Flüssigkeitsverteilers bzw. -sammlers gemäß Anspruch 1, worin ein Werkstück aus Metall oder Kunststoff durch spanende Bearbeitung mit den verbindenden Strömungskanälen und Öffnungen versehen wird, **dadurch gekennzeichnet, dass** eine numerische Strömungssimulation zur Auslegung der Strömungskanäle auf gleiche Verweilzeit und gleichen Volumenstrom genutzt wird.

6. Chromatographiesäulen enthaltend den Flüssigkeitsverteiler bzw. -sammler gemäß Anspruch 1.

7. Verwendung des Flüssigkeitsverteilers und -sammlers gemäß einem der Ansprüche 1 bis 4 oder der Chromatographiesäulen gemäß Anspruch 6 für die analytische sowie präparative Chromatographie.

## Claims

1. Liquid distributor and liquid collector for chromatography columns, comprising at least one liquid inlet and outlet opening and connecting flow channels between inlet and outlet opening to equidistantly arranged openings to the column packing, **characterized in that** some of the connecting flow channels are of symmetrical T-distributor shapes, the rest of asymmetrical T-distributor shapes, such that the same time is required for flow from the inlet to all the outlets of the liquid distributor or from all the inlets to the outlet of the liquid collector through the different flow channels, wherein flow channels with a symmetrical T-distributor shape are defined **in that** they have the same length and the same cross-sectional area, while flow channels with an asymmetrical T-distributor shape have differing lengths and cross-sectional areas.

2. Liquid distributor and collector according to Claim 1, **characterized in that** 50-5000 square millimeters of cross-sectional area of the column packing are assigned to each opening.

3. Liquid distributor and collector according to one of Claims 1 to 2, **characterized in that** the connecting liquid passages (channels) are arranged in one plane.

4. Liquid distributor and collector according to one of Claims 1 to 3, **characterized in that** the cross section of the distributor or collector is round or rectangular.

5. Process for producing the liquid distributor and collector according to Claim 1, in which a workpiece of metal or plastic is provided with the connecting flow channels and openings by machining, **characterized in that** a numerical flow simulation is utilized to design the flow channels for equal residence time and equal volume flow rate.

6. Chromatography column comprising the liquid distributor and collector according to Claim 1.

7. Use of the liquid distributor and collector according to one of Claims 1 to 4 or of the chromatography columns according to Claim 6 for analytical and preparative chromatography.

## Revendications

1. Distributeur de liquide et collecteur de liquide pour colonnes de chromatographie, comprenant au moins une ouverture d'entrée et respectivement de sortie de liquide et des canaux d'écoulement de liaison entre l'ouverture d'entrée et respectivement de sortie vers des ouvertures agencées équidistantes vers le garnissage de la colonne, **caractérisé en ce qu'**une partie des canaux d'écoulement de liaison présentent des formes de distributeur en T symétriques, l'autre partie des formes de distributeur en T asymétriques, de sorte que le même temps soit nécessaire pour l'écoulement de l'entrée vers toutes les sorties du distributeur de liquide et respectivement de toutes les entrées vers la sortie du collecteur de liquide par les différents canaux d'écoulement, les canaux d'écoulement à forme de distributeur en T symétrique étant définis **en ce qu'**ils présentent la même longueur et la même surface de section transversale, tandis que les canaux d'écoulement à forme de distributeur en T asymétrique présentent des longueurs et des surfaces de section transversales différentes.

2. Distributeur et collecteur de liquide selon la revendication 1, **caractérisé en ce que** chaque ouverture correspond à 50 à 5 000 millimètres carrés de surface de section transversale du garnissage de la colonne.

3. Distributeur et collecteur de liquide selon l'une quelconque des revendications 1 à 2, **caractérisé en ce que** les canaux d'écoulement de liaison sont agencés dans un plan.

4. Distributeur et collecteur de liquide selon l'une quelconque des revendications 1 à 3, **caractérisé en ce que** la surface de base du distributeur et respectivement du collecteur est ronde ou rectangulaire.

5. Procédé de fabrication du distributeur et respectivement du collecteur de liquide selon la revendication 1, selon lequel une pièce en métal ou en plastique est munie de canaux d'écoulement de liaison et d'ouvertures par usinage, **caractérisé en ce qu'**une simulation d'écoulement numérique est utilisée pour la conception des canaux d'écoulement avec un temps de séjour identique et un débit volumique identique.

6. Colonnes de chromatographie contenant le distributeur et respectivement le collecteur de liquide selon la revendication 1.

7. Utilisation du distributeur et du collecteur de liquide selon l'une quelconque des revendications 1 à 4 ou des colonnes de chromatographie selon la revendication 6 pour la chromatographie analytique et préparative.
